Europäisches Patentamt

European Patent Office

Office européen des brevets

(19)

(11) Veröffentlichungsnummer: **0 003 978**
**B1**

(12) **EUROPÄISCHE PATENTSCHRIFT**

(45) Veröffentlichungstag der Patentschrift: **19.10.83**

(51) Int. Cl.³: **E 01 C 19/23**, B 62 D 65/00

(21) Anmeldenummer: **79100451.8**

(22) Anmeldetag: **15.02.79**

(54) Strassenwalze.

(30) Priorität: **03.03.78 AT 1518/78**

(43) Veröffentlichungstag der Anmeldung:
**19.09.79 Patentblatt 79/19**

(45) Bekanntmachung des Hinweises auf die Patenterteilung:
**19.10.83 Patentblatt 83/42**

(84) Benannte Vertragsstaaten:
**BE CH DE FR GB IT NL SE**

(56) Entgegenhaltungen:
**AT - B - 312 662
DE - A - 1 709 329
DE - A - 2 058 718
DE - A - 2 139 853
DE - U - 7 208 547**

(73) Patentinhaber: **VOEST-ALPINE Aktiengesellschaft
Friedrichstrasse 4
A-1011 Wien (AT)**

(72) Erfinder: **Hirn, Ferdinand
Aigen/Ennstal nr. 60 (AT)**
Erfinder: **Edlinger, Manfred
Steinach nr. 350 (AT)**

(74) Vertreter: **Hübscher, Gerhard, Dipl.-Ing. et al,
Patentanwälte Dipl.-Ing. Gerhard Hübscher Dipl.-
Ing. Helmut Hübscher Dipl.-Ing. Heiner Hübscher
Spittelwiese 7
A-4020 Linz (AT)**

Courier Press, Leamington Spa, England.

Straßenwalze

Die Erfindung bezieht sich auf eine Straßenwalze mit einem einen Vorder- und einen Hinterläufer tragenden Mittelteil und einem auf diesen gelagerten Antriebsmotor, der über wenigstens eine Pumpe und mindestens einen Hydraulikmotor den Vorder- bzw. Hinterläufer antreibt sowie mit einer Lenkung für mindestens einen der beiden Läufer, die jeweils eine austauschbare Baueinheit bilden.

Da die verschiedenen beim Straßenbau anfallenden Arbeiten verschiedene Verdichtungs- bzw. Glättungswerkzeuge erfordern und diese Arbeiten nicht mit einer Straßenwalze durchgeführt werden können, müssen nahezu bei jeder Baustelle zwei oder mehrere Straßenwalzen verschiedener Bauart eingesetzt werden, was selbstverständlich eine große finanzielle Belastung für den Baustellenbetrieb mit sich bringt. Es wurde daher vorgeschlagen, die Läuferwalzen bzw. Läuferräder der Straßenwalzen austauschbar anzubringen, so daß eine Straßenwalze für mehrere Arbeiten eingesetzt werden kann. Da aber nur die Läuferwalzen bzw. Läuferräder gegen anders gestaltete Läuferwalzen oder -räder ausgetauscht werden können, bleibt das Einsatzgebiet dieser Straßenwalzen mit austauschbaren Läufern stark eingeschränkt.

Bei einer bekannten Straßenwalze dieser Art (DE—A—2 058 718) ist ein zweigeteiltes Gehäuse vorgesehen, dessen Gehäuseteile zum Zwecke einer Knicklenkung miteinander um eine vertikale Achse drehbar verbunden sind. Die Läuferwalzen bzw.-räder bilden dabei mit ihren Achslagern in die Gehäuseteile einsetzbare, austauschbare Baueinheiten, so daß die Straßenwalze hinsichtlich der Art der Läuferwalzen bzw. -räder, nicht aber bezüglich der Lenkung und des Antriebes umgerüstet werden kann, wenn man von der Möglichkeit absieht, die Knicklenkung zu sperren und die Lenkung in der Art von Kettenfahrzeugen durch unterschiedliche Umfangsgeschwindigkeiten mehrerer koaxial angeordneter Räder durchzuführen. Trotz des durch die zusätzliche Lenkungsmöglichkeit bedingten, erheblichen Konstruktionsaufwandes bleiben die Umrüstmöglichkeiten dieser bekannten Straßenwalze auf bestimmte Einsatzgebiete beschränkt.

Bei einer anderen bekannten Straßenwalze (DE—A—1 709 329) ist ein Führungsgestell mit einem Fahrersitz und eine damit verbundene mittige Lenkeinheit vorgesehen, an die auf der gegenüberliegenden Seite wiederum ein Führungsgestell mit den Antriebs- und Hydraulikaggregaten angelenkt ist. Dabei wird die Einheit mit den Antrieben zwar durch eine hydraulische Lenkvorrichtung gelenkt, jedoch wirkt diese Lenkvorrichtung zwischen dem Mittelteil und der Einheit und muß somit beim Austausch gegen eine andere Einheit ausgebaut werden.

Um allen Anforderungen gerecht werden zu können, müßte eine Straßenwalze gefordert werden, die je nach dem Verwendungszweck beispielsweise von einer Einachslenkung auf eine Allradlenkung, von einem Einachsantrieb auf einen Allradantrieb oder auf Vibrationsläufer umgerüstet werden kann, wobei jeweils auch die entsprechenden Läuferarten Verwendung finden müßten.

Der Erfindung liegt somit die Aufgabe zugrunde, eine Straßenwalze der eingangs geschilderten Art so zu verbessern, daß sie in einfacher Weise für alle anfallenden Arbeiten ohne besonderen Aufwand umgerüstet werden kann.

Diese Aufgabe wird dadurch gelöst, daß von den jeweils an den Mittelteil anflanschbaren Baueinheiten für den Vorderläufer und den Hinterläufer zumindest in einer Baueinheit der zur Lenkung drehbar gelagerte Läuferteil mit dem hydraulischen Lenktrieb untergebracht ist. und zumindest eine Baueinheit den Hydraulikmotor trägt. Da die jeweils eine eigene Baueinheit bildenden Vorder- und Hinterläufer bereits mit dem Hydraulikmotor und dem hydraulischen Lenktrieb der zwischen dem drehbar gelagerten und dem undrehbaren, an den Mittelteil anflanschbaren Läuferteil wirkt, versehen sind, kann der selbsttragende Mittelteil für alle vorkommenden Straßenwalzenarten gleich ausgeführt sein, weil sich die für die einzelnen Straßenwalzentypen charakteristischen Unterschiede gemäß der Erfindung eben in den Läuferbaueinheiten zeigen. Erst das Zusammenfassen des zur Lenkung drehbar gelagerten Läuferteiles mit dem Lenktrieb zu einer austauschbaren Baueinheit macht es möglich, beispielsweise eine solche lenkbare Baueinheit gegen eine nicht lenkbare Baueinheit oder eine nicht lenkbare gegen eine lenkbare Baueinheit ohne besondere Zwischenstücke auszutauschen, und zwar durch ein einfaches Anflanschen der jeweils gewünschten Baueinheit an das Mittelstück. Es braucht daher nach dem Anflanschen der Läuferbaueinheiten an den Mittelteil lediglich die Hydraulikverbindung zwischen den einzelnen Aggregaten des Mittelteiles und der Läuferbaueinheiten hergestellt zu werden, um die durch die jeweiligen Läuferbaueinheiten bestimmte Straßenwalzenart funktionstüchtig einsetzen zu können. Durch ein solches Baukastenprinzip wird nicht nur eine gute Anpassungs-möglichkeit an die jeweils anfallenden Straßenarbeiten sichergestellt, sondern auch die Konstruktion und Herstellung der Straßenwalzen vereinfacht. An den in der Grundausrüstung für alle vorkommenden Straßenwalzenarten gleichen Mittelteil brauchen ja nur die verschiedenen Läuferarten angesetzt zu werden, die vom Mittelteil her gesteuert und angetrieben werden, wobei jedoch die unmittelbaren Antriebe bereits in den Läuferbaueinheiten vorhanden sind und diese Antriebe nur vom Mittelteil her beaufschlagt werden. Es können daher auch die Baueinheiten für den Vorder- bzw. Hinterläufer wahlweise mit Vibrationsantrieben ausgerüstet sein, die vom Mittelteil her beaufschlagt werden.

In der Zeichnung ist der Erfindungsgegenstand beispeilsweise dargestellt. Es zeigen die

Fig. 1 und 2 eine erfindungsgemäße Straßenwalze schematisch in Seitenansicht und Draufsicht und die

Fig. 3 bis 6 verschiedene Möglichkeiten bezüglich der Ausbildung von Läuferbaueinheiten.

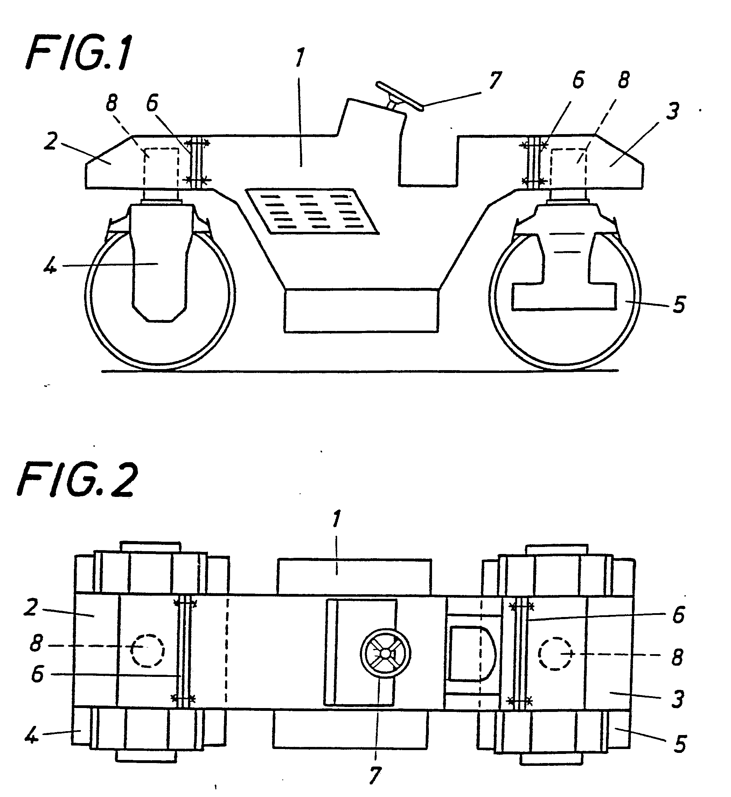

Wie aus den Fig. 1 und 2 hervorgeht, besteht die dargestellte Straßenwalze aus einem selbsttragenden Mittelteil 1 und daran angeflanschten Baueinheiten 2 und 3, die den Vorderläufer 4 und den Hinterläufer 5 bilden. Diese Baueinheiten 2 und 3 sind über die Flansche 6 durch Schrauben mit dem Mittelteil 1 lösbar verbunden,so daß die Baueinheiten 2 und 3 durch andere Baueinheiten ersetzt werden können.

Der Mittelteil 1 trägt einen nicht näher dargestellten Antriebsmotor, vorzugsweise einen Dieselmotor, der mit konstanter Drehzahl eine Pumpe, beispielsweise eine Axialkolbenpumpe, antreibt, mit der die Fördermenge eines Hydraulikmittels bei konstanter Motordrehzahl stufenlos variiert werden kann. Der durch diese Pumpe erzeugte Hydraulik-mittelstrom wird, falls sowohl der Vorderläufer als auch der Hinterläufer angetrieben wird, den zu diesem Zweck in den Baueinheiten 2 und 3 vorgesehenen Hydraulikmotoren über entsprechende Druckleitungen zugeführt. Wird nur ein Läufer angetrieben, so wird nur die Hydraulikverbindung zu dessen Motor hergestellt. Für die Lenkung der Straßenwalze gilt das gleiche Konstrucktionsprinzip. Betätigt wird die Lenkung über das Lenkrad 7, während der eigentliche Lenktrieb in den Baueinheiten 2 bzw. 3 untergebracht ist und auf den Drehzapfen 8 des drehbaren Läuferteiles wirkt. Ist in den Läuferbaueinheiten 2 und 3 ein Vibrationsantrieb vorhanden, so wird dieser ebenfalls vom Mittelteil 1 her nach einer entsprechenden Verbindung betätigt. Der Mittelteil 1 kann demnach in beliebiger Weise mit den verschiedenen Läuferbaueinheiten zu sehr verschiedenen Straßenwalzen kombiniert werden.

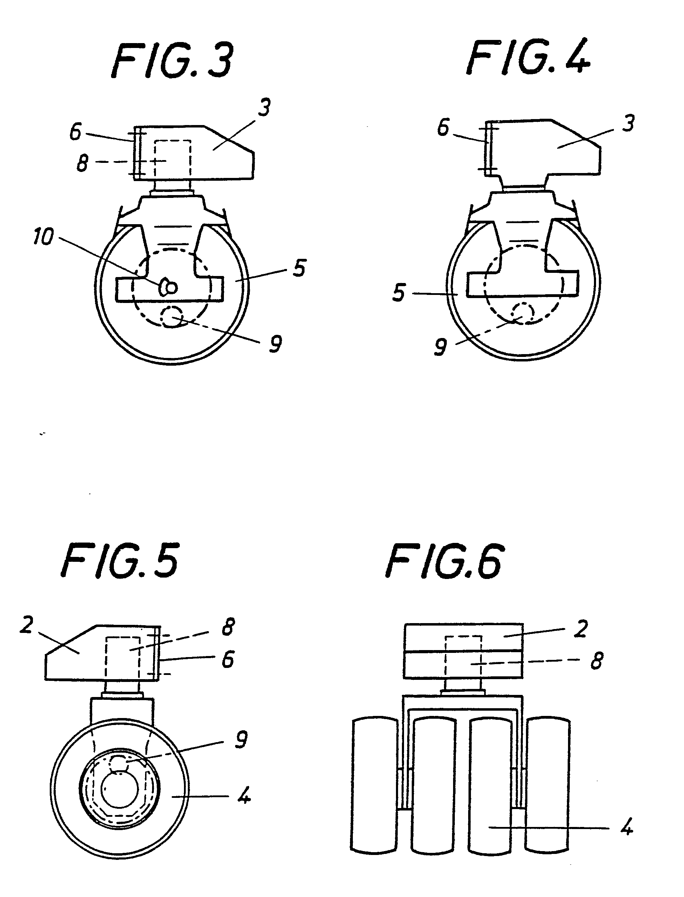

In den Fig. 3 bis 6 sind nun beispielsweise Möglichkeiten zur Ausbildung verschiedener Baueinheiten 2 und 3 dargestellt. Die Fig. 3 zeigt einen lenkbaren Hinterläufer 5, der über einen Hydraulikmotor 9 antreibbar ist und zusätzlich einen Vibrationsantrieb 10 trägt. Die Baueinheit nach Fig. 4 ist ähnlich wie die Baueinheit nach Fig. 3 aufgebaut, doch ist der walzenförmige Läufer 5 nicht lenkbar. Außerdem ist kein Vibrationsantrieb vorgesehen.

Die Fig. 5 und 6 zeigen einen mit Gummirädern versehenen Läufer in Seiten- und Vorderansicht, der über den Drehzapfen 8 gelenkt und über den Motor 9 angetrieben werden kann.

Es zeigt sich somit, daß durch verschiedene Kombinationen der einzelnen Baueinheiten 2 und 3 mit dem Mittelteil 1 allen Anforderungen entsprechende Straßenwalzen zusammengestellt werden können, ohne daß die Grundkonstruktion auf einen besonderen Straßenwalzentyp abgestellt werden muß.

**Patentansprüche**

1. Straßenwalze mit einem einen Vorder- und einen Hinterläufer (4, 5) tragenden Mittelteil (1) und einem auf diesem gelagerten Antriebsmotor, der über wenigstens eine Pumpe und mindestens einen Hydraulikmotor den Vorder- bzw. Hinterläufer (4, 5) antreibt sowie mit einer Lenkung für mindestens einen der beiden Läufer (4, 5), die jeweils eine austauschbare Baueinheit (2, 3) bilden, dadurch gekennzeichnet, daß von den jeweils an den Mittelteil (1) anflanschbaren Baueinheiten (2, 3) für den Vorderläufer (4) und den Hinterläufer (5) zumindest in einer Baueinheit (2, 3) der zur Lenkung drehbar gelagerte Läuferteil mit dem hydraulischen Lenktrieb untergebracht ist und zumindest eine Baueinheit (2, 3) den Hydraulikmotor (9) trägt.

2. Straßenwalze nach Anspruch 1, dadurch gekennzeichnet, daß die Baueinheit (2, 3) für den Vorderläufer (4) bzw. Hinterläufer (5) einen Vibrationsantrieb (10) aufweist.

**Revendications**

1. Rouleau compresseur comportant une partie centrale (1) portant un rotor avant et un rotor arrière (4, 5) et un moteur d'entraînement monté sur cette partie et qui entraîne les rotors avant et arrière (4, 5) par l'intermédiaire d'au moins une pompe et d'au moins un moteur hydraulique, ainsi qu'une direction pour l'un au moins des deux rotors (4, 5) qui forment chacun un bloc remplaçable (2, 3), caractérisé par le fait que parmi les blocs (2, 3) pouvant chacun être raccordés par brides à la partie centrale (1) et affectés au rotor avant (4) et au rotor arrière (5), dans au moins un bloc (2, 3) est logée la partie de rotor montée de manière à pouvoir tourner en vue de 1 direction et munie du mécanisme hydraulique de direction et qu'au moins un bloc (2, 3) porte le moteur hydraulique (9).

2. Rouleau compresseur selon la revendication (1), caractérisé par le fait que le bloc (2, 3) affecté au rotor avant (4) ou au rotor arrière (5) présente un entraînement de vibration (10).

Claims

1. A road roller comprising a central section (1), which carries front and rear sub-frames (4, 5) and a drive motor, which is mounted on the central section and by means of at least one pump and at least one fluid drive drives the front and/or rear sub-frames (4, 5), also comprising a steering system for at least one of the two sub-frames (4, 5), each of which constitutes a replaceable unit (2, 3), characterized in that the subframe part which is rotatably mounted to be steered, as well as the hydraulic steering drive, is accommodated in at least one of the units (2, 3) which are adapted to be flange-connected to the central section (1) and comprise the front sub-frame (4) and the rear sub-frame (5), respectively, and at least one unit (2, 3) carries the fluid drive (9).

2. A road roller according to claim 1, characterized in that the unit (2, 3) comprising the front sub-frame (4) and/or the rear sub-frame (5) comprises a vibrator (10).

FIG.1

FIG.2

FIG.3

FIG.4

FIG.5

FIG.6